# EUROPEAN PATENT SPECIFICATION

(11) **EP 2 807 011 B1**
(45) Date of publication and mention of the grant of the patent: **31.05.2017**
(21) Application number: 12818889.3
(22) Date of filing: 20.12.2012
(51) Int. Cl.: B29C 45/76, G01N 29/14, G01N 29/46

(54) **ACOUSTIC NOISE SENSING FOR CONTROLLING MANUFACTURE OF A COMPONENT PART MADE OF A FLOWABLE BASE MATERIAL**
MESSUNG VON AKUSTISCHEM RAUSCHEN ZUR STEUERUNG DER HERSTELLUNG EINES BAUTEILS AUS EINEM FLIESSFÄHIGEN GRUNDMATERIAL
DÉTECTION DE BRUIT ACOUSTIQUE POUR LA COMMANDE DE FABRICATION D'UNE PARTIE DE COMPOSANT RÉALISÉE EN MATIÈRE DE BASE POUVANT FLUER

(30) Priority: 23.01.2012 GB 201201067
(43) Date of publication of application: 03.12.2014
(73) Proprietor: Montanuniversität Leoben, 8700 Leoben (AT)
(72) Inventor: KUKLA, Christian, 8712 Proleb (AT); LUCYSHYN, Thomas, 8793 Trofaiach (AT); RATH, Gerhard, 8700 Leoben (AT); MÜLLER, Florian, 8700 Leoben (AT)
(74) Representative: Dilg, Haeusler, Schindelmann Patentanwaltsgesellschaft mbH
(86) International application number: PCT/EP2012/076526
(87) International publication number: WO 2013/110422

(56) References cited:
- DE-U1-202010 007 655
- JP-A- S59 138 427
- JP-A- S59 232 823
- JP-A- 2000 102 959
- US-A1- 2004 025 592
- Anonymous: "Piezomikrofon - Wikipedia", , 8 May 2009 (2009-05-08), XP055260015, Retrieved from the Internet: URL:https://de.wikipedia.org/w/index.php?t itle=Piezomikrofon&oldid=59826154 [retrieved on 2016-03-21]

## Description

### Field of the invention

The invention relates to a tool for manufacturing a component part from a flowable base material, and a method of controlling manufacture of a component part in a tool.

### Background of the invention

Injection molding is a manufacturing process for producing parts from thermoplastic, elastomeric and thermosetting plastic materials. Thermoplastic materials are fed into a heated barrel, mixed, and forced into a mold cavity where it cools and solidifies to the configuration of the cavity. Elastomeric and thermosetting materials are injected into a heated mold, where they harden by chemical reaction. Injection molding is widely used for manufacturing a variety of parts, from the smallest component to entire body panels of cars.

US 2003/0008028 discloses a device for monitoring force and pressure in injection moulding machines, with at least one sensor for measuring the deformation of a machine part that is deformed by the closing or injection pressure, wherein a supporting body is provided that relieves the machine part monitored by the sensor as soon as the closing or injection pressure exceeds a certain value that is less than half its maximum value.

Robert X. Gao, Zhaoyan Fan, David O. Kazmer, "Injection molding process monitoring using a self-energized dual-parameter sensor", CIRP Annals - Manufacturing Technology 57 (2008), pp. 389 to 393 discloses that on-line monitoring of polymer melt state is critical to ensuring part quality in injection molding and presents a dual-parameter sensing method for simultaneous measurement of pressure and temperature variations within the mold cavity through a modulator circuit. Pressure variation during the molding cycle, which is proportional to the electrical charge output of a piezoceramic stack, is discretized into acoustic pulses that are subsequently frequency-modulated by a temperature-sensitive oscillator (TSO). The ability to measure two parameters using one sensor package without batteries and cables for data transmission provides a new platform for monitoring injection molding processes.

JP S59 232 823 A discloses a tool for molding a resin product. The tool comprises an acoustic emission sensor (AE sensor) which emits a high frequency wave into the resin product within the tool. Defects in the resin product generate an elastic wave with a high frequency, thereby vibrating the surface of the molded product with a small amplitude. The vibration is detected by the AE sensor. Based on the detected vibration, the production of the molded product can be monitored. When the production is finished, the molded product is separated from the tool by an ejection pin.

DE 202 010 007 655 U1 discloses a device for monitoring an injection molding process. The device comprises a sensor for detecting vibrations which occur when a material to be molded flows within the device. The sensor is arranged on an outer surface of the device. The detected vibration signal is compared to a reference signal, thereby monitoring the injection molding process.

JP S59 138 427 A discloses an injection molding device for controlling an injection holding pressure in a mold of the device. The device comprises a plurality of ultrasonic elements. A central controller sends signals to the ultrasonic elements and compares returned signals from the ultrasonic elements with preset limit values. Based on the comparison, the injection holding pressure is controlled, e.g. by filling additional resin into the mold.

US 2004 025 592 A1 discloses an injection molding apparatus for monitoring an injection mold process. The apparatus comprises a transducer, e.g. a piezoelectric crystal, which is attached on an outer surface of the apparatus. The piezoelectric crystal is excited by a voltage which causes crystal changes and produces a vibration. The vibration propagates through the object to be molded, thereby producing a resonance signal. The resonance signal is detected by the transducer and based on the detected signal process parameters can be adapted.

JP 2000 102 959 A discloses a molding device. The device comprises three sensing means which have a bar-shaped part and a deflecting part connected to the bar-shaped part. A pressure of a material in the molding device is applied to the bar-shaped part, thereby deflecting the deflection part of the sensing means. The deflection is measured by a deflection sensing element. By sensing the deflection in the three sensing means, a flow velocity and a pressure within the device can be determined.

Further background art is disclosed in WO 03/089214, WO 2011/154123, EP 2 317 308 and WO 2010/094809.

### Object and summary of the invention

It is an object of the invention to efficiently monitor a manufacturing process of a component part in a manufacturing tool.

In order to achieve the object defined above, a tool for manufacturing a component part from a flowable base material, and a method of controlling manufacture of a component part in a tool according to the independent claims are provided.

According to an exemplary embodiment, a tool for manufacturing a component part from a flowable base material (such as liquid plastic material, ceramic suspension or liquid metal) is provided, wherein the tool comprises a processing chamber (for instance a mold cavity of an injection molding tool) into which the flowable base material is introducible for manufacturing the component part (for instance by subsequent solidification of the flowable base material), an acoustic sensor configured for sensing an acoustic signal originating (particularly directly) from the tool, particularly from the processing chamber, and being indicative of an interaction (for instance a physical contact resulting in the exertion of a mechanical force) between the flowable base material and the tool (such an interaction may result from the introduction of the flowable base material into the processing chamber), particularly the processing chamber, during the manufacturing wherein the acoustic sensor comprises a movable actuator (which may contribute to the generation of the acoustic signal), and a control unit (such as a processor like a central processing unit or a microprocessor) configured for controlling (for instance by applying at least one control parameter or control command) or regulating the manufacturing in the processing chamber and/or collecting data for documentation based on the sensed acoustic signal.

According to another exemplary embodiment, an acoustic sensor for sensing an acoustic signal originating from a tool, particularly from a processing chamber of a tool, for manufacturing a component part from a flowable base material is provided, wherein the acoustic sensor comprises a movable actuator to be positioned at the processing chamber and being configured for being moved by the flowable base material in response to the introduction of the flowable base material into the processing chamber, and an acoustic wave generating element configured for generating an acoustic wave with a predetermined frequency characteristic (for instance at or around a resonance frequency) upon being hit by the actuator when being moved by the flowable base material.

According to a further exemplary embodiment, a method of controlling manufacture of a component part in a tool is provided, wherein the method comprises introducing a flowable base material in a processing chamber of the tool for manufacturing the component part, sensing an acoustic signal originating from the processing chamber during the manufacturing and being indicative of an interaction between the flowable base material and the processing chamber, wherein a motion of a movable actuator of an acoustic sensor contributes to the generation of the acoustic signal, and controlling and/or documenting the manufacturing in the processing chamber based on the sensed acoustic signal.

According to yet another embodiment, an acoustic signal originating directly from a movable actuator in a processing chamber is used for controlling and/or documenting manufacture of a component part from a flowable base material.

In the context of this application, the term "component part" may particularly denote any structural member manufacturable in a cavity of a processing chamber. In contrast to the flowable base material, the component part may be in the solid phase, i.e. may be at least partially solidified base material.

In the context of this application, the term "flowable base material" may particularly denote any raw material which is flowable (for instance gaseous, liquid and/or granular) at the beginning of the manufacturing procedure and which may be hardened or solidified, for instance by supply of thermal energy and/or pressure, during the manufacture procedure so as to form a component part in the solid state. The flowable base material may be, for instance, a plastic, a ceramic or a metallic material.

In the context of this application, the term "processing chamber" may particularly denote a chamber which may be constituted of one or more molds (for instance from two halves) enclosing together a cavity. Within such a cavity, the component part may be formed by introducing and solidifying flowable base material.

In the context of this application, the term "acoustic sensor" may particularly denote any physical structure capable of outputting a sensor signal in the presence of acoustic waves, i.e. mechanical oscillations.

In the context of this application, the term "acoustic signal" may particularly denote any signal, for instance in electronic, optic or optoelectronic form, which is indicative of acoustic properties captured from the manufacturing tool and/or its environment.

In the context of this application, the term "controlling the manufacturing" may particularly denote taking a certain measure which has an impact on the manufacture of component parts in the tool. For instance, such a controlling may be a (for instance feedback-based) regulation of the manufacture process, particularly a modification of one or more process parameters (such as temperature, pressure, supply of base material, timing of subsequent manufacturing steps) in response to the measurement of the sensor signal.

In the context of this application, the term "moveable actuator" (such as an injection pin) may particularly denote a physical body which can be mounted in the tool so as to be moved by a force exerted by the flowable base material when the latter is introduced in the processing chamber. This physical body can be actuated by the flowable base material to move. This physical body can further actuate (for instance hit) an acoustic wave generating element (such as a separate sounding body or a part or member of the manufacturing tool, particularly the processing chamber) to excite a mechanical oscillation which equals to the generated acoustic wave.

In the context of this application, the term "generating an acoustic wave with a predetermined frequency characteristic" may particularly denote that the acoustic wave generating element is dimensioned, shaped and made from such a material that its frequency response when being hit by the moving actuator has a predefined characteristic, i.e. results in the emission of acoustic waves in a specially defined frequency range. Particularly, each physical body has a certain resonance frequency at (and around which) it is capable of generating acoustic waves.

In the context of this application, the term "moveable actuator" may particularly denote a physical body, i.e. a mechanical entity, which is mounted at the tool, particularly at the processing chamber, so that is undergoes or experiences a translatory motion or displacement when it interacts with flowable base material being introduced in the processing chamber. Such a motion shifts the center of gravity of the movable actuator rather than exerting an oscillating excitation (as in case of a piezo element which is not consider as a movable actuator). Thus, the movable actuator may be mounted to be displaced as a whole when the flowable base material contacts the movable actuator rather than experiencing a sequence of compressions and expansions. Hence, the melted mass (or flowable base material) itself may directly move the movable actuator and generates the acoustic waves by a mechanical impact.

According to a first aspect, a manufacturing process monitoring system is provided in which an acoustic signal generated by flowable base material upon acting directly on the processing chamber is detected by an acoustic sensor. The sensed signal can be used for controlling one or more process parameters or adjusting other conditions of a manufacturing process (such as tool-related actuating elements, temperature regulation of a hot runner nozzle, etc.) of a component part which is made by solidifying a flowable base material filling the processing chamber. Additionally or alternatively, the acoustic signal may be also used for documentation purposes, i.e. for documenting parameters and/or conditions under which a specific component part has been manufactured (such data may be stored in a storage device or database and may be assigned to a specific component part so as to be accessible later by a user, for instance for quality control or to determine whether a failure of a component part results from a failure during the manufacturing process). In contrast to conventional approaches, exemplary embodiments of the invention rely on an acoustic sensor signal rather than on a signal of a pressure detector, temperature detector or the like which renders the manufacturing process and the monitoring thereof significantly simpler. A reason for this simplification is that the acoustic sensor can be arranged at least partially outside of the processing chamber so that an easy accessibility of the acoustic sensor, for instance in case of failure or maintenance, is possible. Moreover, guiding cables from a processing chamber to an outside of the tool, which is cumbersome in conventional approaches, is dispensable according to exemplary embodiments of the invention since at least the part of the sensor which is arranged at or in the processing chamber (particularly in direct physical contact with the flowable base material when flowing through the processing chamber) can be operated in a wireless manner. The part of the acoustic sensor which is sensitive to acoustic waves can be a body noise sensor arranged outside of the tool since material of the tool is capable of transmitting acoustic signals from an interior thereof to an exterior thereof. Beyond this, first experiments have shown that the detection of acoustic signals at an outside surface of the tool is a reliable fingerprint of the processes within the processing chamber, wherein acoustic signals originating from the tool are to be detected. For instance, the clicking noise of an ejection pin of an injection molding machine carries important information whether or not a manufacturing process works properly. By triggering the acoustic wave generation, as a signal to be detected, by a movable actuator communicating with a cavity of the processing chamber, the generation of the acoustic waves is made possible without the need of implementing additional electronics in the processing chamber.

According to another second aspect, an acoustic sensor appropriate for implementation in a manufacturing monitoring system as mentioned above is provided. It should however be said that also other acoustic sensors may be implemented instead in the manufacturing monitoring process. According to the second aspect of the present invention, an actuator is mounted movably (for instance pivotably or reciprocatable) in the processing chamber so that its position can be altered when flowable base material (from which the component part to be manufactured is at least partially constituted) is introduced into a cavity of the processing chamber. The flowing material displaces the movable actuator so as to force the movable actuator to abut against an acoustic wave generating element. The latter is specifically configured to generate defined acoustic oscillations (for instance defined in terms of frequency) for detection by an acoustic wave sensitive element which may be arranged externally of the processing chamber. Therefore, the acoustic waves may be generated close to the processing chamber by a simple mechanical abutment arrangement, wherein the actual detection of an acoustic signal may be performed outside of the processing chamber.

In view of the increasing degree of complexity of injection molded parts and other component parts made by an original molding process, also the requirements with regard to the regulation of the process of manufacturing such parts from a melted mass becomes of increasing importance. The implementation of acoustic sensors in addition or alternative to conventional sensors such as pressure, temperature sensors and strain gauge sensors allows to simplify the sensing while allowing to obtain a meaningful set of data usable as a basis for the regulation and/or documentation of the manufacturing process.

Exemplary embodiments of the invention propose to implement acoustic noise sensing in processing tools for original molding of a flowable base material, for process documentation, for control and/or for regulation.

Exemplary embodiments of the invention use acoustic signals originating from and propagating out of the manufacturing tool during a running manufacturing process for the purpose of collecting information with regard to the manufacturing process as well as for documentation, continuous quality control, control or regulation of the processing process. Additionally, changes of acoustic noise emission of an injection molding machine may allow to detect possible errors of the machine at an early stage. Hence, also countermeasures may be taken early.

Exemplary embodiments of the invention have the advantage that the acoustic sensors do not have to be integrated as a whole within the processing chamber of the manufacturing tool. On the contrary, at least a sensor part can be attached onto an external surface of the manufacturing tool. This results in savings in tool construction and a simplification of the handling of the sensor device. For the acoustic wave sensitive parts of the sensors, this way of installation is advantageous as well, since they do not have to come into direct contact with high temperature and/or high pressures of flowable base material or already solidified base material (which can be abrasive or corrosive). Hence, the acoustic signals are less prone to failure as compared to conventional sensor signals. Furthermore, the operation of a microphone or other acoustic sensors is a simple procedure for persons handling the manufacturing tool or the sensor components thereof so that the system is easy in use.

First experiments have shown that particularly acoustic signals being generated indirectly by the manufacturing process can be used for the above and other purposes. These are for instance acoustic signals which are generated when an ejection pin is pressed back by the processed base material and abuts against a stationary mounted plate or other physical body. The acoustic signal generated by the flowable base material itself usually has a smaller intensity. In exemplary embodiments, these sensor signals may however be used additionally as well (for instance, air being displaced upon injecting flowable base material in the processing chamber may also result in measurable noise).

Hence, an exemplary embodiment of the invention implements active and/or passive elements for acoustic noise generation and positions one or more of such sensors at corresponding locations. In exemplary embodiments, ejection pins are used in conjunction with the actual acoustic wave sensor element. Detecting noise from different ejection pins in a manufacturing tool having plural processing chambers can be performed as well and simultaneously.

### Detailed description of embodiments of the invention

In the following, further exemplary embodiments of the tool will be explained. However, these embodiments also apply to the acoustic sensor according to the second aspect, the method of controlling manufacture, and the method of use according to the first aspect.
According to an embodiment, also sophisticated information may be derived from the system by analyzing the sensed acoustic signals. For instance, two acoustic actuators may be implemented at different positions in the tool and the points of time of their activation may be detected. This data may be used to calculate the flow velocity of the flowable base material.

Implementing an acoustic sensor according to the second aspect in a manufacturing monitoring system according to the first aspect of the invention is particularly advantageous since the acoustic wave generation within or close to the processing chamber in combination with the actual detection of the generated acoustic waves outside thereof allows for a highly accurate surveillance of the manufacturing process with low hardware effort.
In an embodiment, the tool is configured as an original mold tool for manufacturing the component part by originally molding, particularly configured as an injection molding tool or a pressure casting tool. In original molding, a component part is manufactured from a flowable base material without redefining a shape of the component part after solidification of the flowable base material. However, other embodiments may also use other tools such as extrusion molding or the like. Not only injection molding and pressure molding are possible as implementation examples of embodiments, but any kind of molding and related processes may be used in this context.

In an embodiment, the acoustic sensor is configured for sensing an acoustic signal in a frequency range between about 1 Hz and about 500 kHz, particularly between about 100 Hz and about 30 kHz. Hence, exemplary embodiments of the invention are not limited to acoustic frequencies being hearable by the human ear (which can be considered to be in a range from 16 Hz to 20 kHz), but can be also extended to other frequency ranges, such as ultrasonic sound. By adjusting the generated and detected frequency range of a sensor implemented according to exemplary embodiments of the invention, it is possible to separate between different sensor signals by a frequency analysis if different acoustic sensors operate in different frequency bands. Furthermore, other analysis methods can be used, e.g. convolution methods, such as wavelets or local approximation.

In an embodiment, the tool comprises a plurality of acoustic sensors each configured for sensing an acoustic signal originating from the tool, particularly from the processing chamber, during the manufacturing and each being positioned at a different position relative to the processing chamber. The provision of multiple acoustic sensors located at different positions within the manufacturing tool and each of which being distinguishable from one another by at least one parameter (for instance by different frequency behavior) allows for obtaining accurate information regarding the manufacturing procedure within the processing chamber with spatial resolution. For instance, one sensor producing (for instance by means of a movable actuator and an acoustic wave generating element) and sensing (for instance by means of an acoustic wave sensitive element) acoustic waves at 5 kHz may be positioned at an injection position, and another one may be at a position far away therefrom and may produce (for instance by means of another movable actuator and another acoustic wave generating element) and sense (for instance by means of another acoustic wave sensitive element) acoustic waves at 10 kHz. The combination of pre-known location information of the various sensors and the detection of certain frequencies of the sensor signal may allow to unambiguously assign signals to the positions within the processing chamber.

It should be said that exemplary embodiments of the invention also encompass embodiments which combine one or more acoustic sensors with one or more other sensors, such as pressure and/or temperature sensors. In such an embodiment, synergistic effects may be achieved by making use of the complimentary detection properties of the different types of sensors, i.e. their sensitivity to different events or parameters.

In an embodiment, each of the plurality of acoustic sensors is sensitive to an acoustic signal in a respective frequency range differing from at least one other frequency range, particularly differing from all other frequency ranges, in which at least one other, particularly in which all other, of the plurality of acoustic sensors is or are sensitive. The distinction between different sensor signals may be realized using frequency filters such as band pass filters at an input of the various sensors so that dedicated sensor signals can be detected by each of the acoustic wave sensitive elements of the various acoustic sensors. Also, a frequency dependent analysis of sensor signals may also implement mathematical procedures such as a Fourier transformation. Furthermore, convolution methods, such as wavelets or local approximation, can be used to identify the acoustic sensor.

In an embodiment, one acoustic wave sensitive element detects signals from multiple or all acoustic wave generating elements of multiple or all acoustic sensors. Frequency filtering or a Fourier analysis or a convolution may be performed so as identify individual signals or, more precisely, assign individual signals to individual acoustic sensors.

In an embodiment, more than one acoustic wave sensitive element may be used to locate one activated acoustic sensor (for instance one activated movable actuator and optionally one acoustic wave generating element) out of many by determining the time differences in the signals.

The tool may comprise one or more acoustic wave sensitive elements and/or one or more acoustic wave generating elements and/or one or more movable actuators. A movable actuator may act on one or more acoustic wave generating elements. Multiple movable actuators may act on one acoustic wave generating element. Hence, all functional permutations of acoustic wave sensitive elements, acoustic wave generating elements and movable actuators are possible.

It is possible to implement any desired number (one or a plurality) of acoustic wave generating elements in the tool which may have the same resonance frequency or different resonance frequencies. It is possible to implement any desired number (one or a plurality) of acoustic wave sensitive elements in the tool which may have the same resonance sensitivity or different sensitivities.

In an embodiment, the control unit is configured for controlling the manufacturing based on an analysis of the sensor signals of the plurality of acoustic sensors in the time domain. In such an embodiment, the chronologic sequence of detected sensor signals originating from different sensors may be used as a basis for the control or regulation of the manufacturing process. The points of time at which the various sensor signals can be detected depend on their frequency behavior so that the chronology of the detection of the acoustic waves provides meaningful information in terms of manufacturing process control. For instance, arranging acoustic wave generating elements with certain frequency behavior (which is connected to the physical dimension of a respective sound body) with pre-known information with regard to the position of such sensors, spatially dependent information with regard to the manufacturing process within the manufacturing tool can be obtained.

In an embodiment, the control unit is configured for controlling the manufacturing based on spatial information derived from a correlation between the respective frequency range and a pre-known position of the respective acoustic sensor. For example, certain acoustic signals giving information with regard to a progress of the manufacturing process may be detected. An example is a detection of a click of an ejection pin in an injection molding chamber which provides the information that the injection molding procedure has finished and that manufactured component parts can now be removed from the processing chamber. Thus, the detection with such a click can be used as a trigger for opening the processing chamber, for instance separating process chamber halves or the like. Also, the volumetric filling can be surveyed, being an important information for the switchover from the velocity controlled filling phase to the pressure controlled packing phase.

In an embodiment, the control unit is configured for adjusting at least one process parameter of the manufacturing process based on the sensed acoustic signal. Such process parameters may involve adjusting of temperature, pressure, supply of flowable base material, selection of injection and solidification time intervals, etc. Particularly, manufacture of component parts in the future may be performed with a parameter set which is altered as compared to a parameter set according to which component parts have been manufactured in the past.

In an embodiment, the control unit is configured for controlling a timing of the manufacturing process based on a time characteristic of the sensed signal. For instance, the supply of flowable base material may be timed based on detected information.

In an embodiment, the acoustic sensor comprises one or more acoustic wave generating elements at the processing chamber and configured for generating an acoustic wave in response to the introduction of the flowable base material into the processing chamber, and one or more acoustic wave sensitive elements located outside of the processing chamber, particularly outside of an outermost housing of the tool, and being configured for sensing the generated acoustic waves, particularly configured for sensing generated structure-borne acoustic waves, and for determining the acoustic signal based on the sensed acoustic wave. In such an embodiment, the sensor includes a mechanism of generating the acoustic waves and detecting the latter by a correspondingly sensitive element such as a piezoelectric element which may be attached to an outer surface of the tool. The acoustic wave generating element, in contrast to this, may be a noise body or the like and may be positioned within the tool (possibly, but not necessarily pointing in the molding chamber).

In an embodiment, the tool comprises a determining unit (which may form part of the same processor providing the control task or which may be a separate processor) configured for determining, from the sensor signal, information indicative of the interaction between the flowable base material and the tool. Thus, the detected information may be a direct fingerprint of the interaction, for instance may be a point of time at which the interaction (for instance force transmission) has taken place.

In an embodiment, the acoustic sensor comprises a movable actuator mounted to be positioned at least partially within the processing chamber in the absence of flowable base material or to be positioned outside of the processing chamber in the presence of the flowable base material. Hence, injection of the flowable base material into the processing chamber may trigger a sliding motion of the actuator. In other words, a physical contact between the flowable base material and may be a trigger for the sliding of the actuator out of the chamber into which the flowable base material is injected. Thus, the flowable base material may press the movable actuator out of the processing chamber.

In an embodiment, the part of the acoustic sensor which is positioned within the processing chamber is purely mechanical, particularly free of electronics. The acoustic sensor may be constituted by multiple components, a part of which being located within the processing chamber (such as a movable actuator and an acoustic wave generating element) and a remaining part of which being located externally of the processing chamber or attached to an outer surface thereof. It is advantageous that the former ones do not need any cables and/or are free of electronics being prone to deterioration under harsh conditions (temperature, pressure, etc.) which may occur during the manufacture process. Hence, configuring all sensor components which are integrated in the tool exclusively as mechanical components allows to omit the transport of electric signals or electric power supply to an interior of the tool.

In one embodiment, the acoustic sensors may be body noise sensors, which are capable of detecting acoustic waves propagating through a solid body. However, it is alternatively also possible that the acoustic sensors detect sensor signals in the air. By detecting body noise, it is also possible to derive pressure information by an evaluation of the acoustic sensor signal. Thus, the pressure according to which the flowable base material flows through the processing chamber can be determined which is in turn correlated to the flow velocity of the flowable base material. The flow velocity of the flowable base material is a quality control criterion for the manufacturing process.

In one embodiment, the acoustic sensor signal is used for determining a position at which the flowable base material is presently located within a processing chamber so as to allow to regulate the supply of further flowable base material to the processing chamber accordingly.

In an embodiment, it is possible to measure an acoustic noise background (for instance before starting a manufacturing process) and to subtract the corresponding background signal from a sensor signal to perform a baseline correction.

In the following, further exemplary embodiments of the acoustic sensor according to the second aspect will be explained. However, these embodiments also apply to the tool, the method of controlling manufacture, and the method of use according to the first aspect.

In an embodiment, the movable actuator is an ejection pin configured for ejecting a manufactured component part out of the processing chamber. By using an ejection pin also as movable actuator, the latter can be synergetically used for two purposes, i.e. for ejecting a solidified injection molding component part on the one hand and as part of a sensor for manufacturing process monitoring on the other hand. Thus, one sensor part may generate the acoustic waves to be detected by another sensor part. Therefore, a compact tool may be provided in which ejection function and sensor signal generation may be functionally correlated, thereby providing meaningful sensor information and reliably removing the component from the processing chamber after its manufacture is finished.

In another embodiment, the movable actuator and the acoustic wave generating element are integrally formed as a common structure, particularly is configured as an actuator body intrinsically generating a click noise upon moving. In such an embodiment, motion of the movable actuator triggered by the flowable base material on the one hand and generation of the acoustic waves to be detected by a corresponding sensitive element on the other hand may be one and the same process provided by a snap action. Such a snapping may transform the common structure from one stable mechanical configuration to another stable mechanical configuration, wherein the transformation is accompanied by a click sound ("Knackfrosch"). As a further alternative, a flappable membrane or the like may be used as well.

In an embodiment, the acoustic sensor further comprises an acoustic wave sensitive element being configured for sensing the acoustic wave generated by the acoustic signal generator and for determining the acoustic signal based on the sensed acoustic wave. Such an acoustic sensitive element can be considered as an actual acoustic wave detector and providing an output signal in an electronic or electromagnetic form. In an embodiment, the acoustic wave sensitive element is one of the group consisting of a piezoelectric element, a semiconductor member and a membrane-based microphone. However, these are only examples, and other exemplary embodiments are possible as well. The acoustic wave sensitive element may be attached to an external surface of the tool.

In an embodiment, the acoustic sensor comprises a pressure determining unit configured to determine information indicative of a pressure-over-time characteristic in the processing chamber based on the determined acoustic signal. In such an embodiment, the acoustic signal may be recalculated so that further information with regard to a pressure in an interior of the manufacturing tool can be derived. An experimentally obtained or a theoretically calculated correlation between detected acoustic waves and pressure conditions in the processing chamber may be used for this pressure determining.

### Brief description of the drawings

The invention will be described in more detail hereinafter with reference to examples of embodiment but to which the invention is not limited:
- Fig. 1: illustrates an acoustic sensor section of an injection molding tool for manufacturing an injection molding component part from flowable plastic material according to an exemplary embodiment of the invention.
- Fig. 2: shows an injection molding tool according to an exemplary embodiment of the invention.
- Fig. 3: is a block diagram illustrating procedures and hardware components used for evaluating a detectable acoustic signal measured according to an exemplary embodiment of the invention.
- Fig. 4: is an image of an injection molded component part from a flowable base material manufactured according to an exemplary embodiment of the invention.
- Fig. 5: is a diagram illustrating a dependency between a number of samples per time and an acceleration of a tool according to an exemplary embodiment of the invention.
- Fig. 6: is a diagram illustrating a dependency between a number of samples per time and a screw position of a tool for manufacturing a component part from a flowable base material according to an exemplary embodiment of the invention.
- Fig. 7: is a cross-section of a tool for manufacturing a component part from a flowable base material according to another exemplary embodiment of the invention.
- Fig. 8: is an image of a tool for manufacturing a component part from a flowable base material according to an exemplary embodiment of the invention.
- Fig. 9: is a diagram illustrating a dependency between time on the one hand and an acoustic signal or a screw position of an injection molding tool on the other hand according to an exemplary embodiment of the invention.
- Fig. 10: is a diagram which is similar to Fig. 9.
- Fig. 11: shows a plan view of an injection molding tool with an acoustic sensor according to an exemplary embodiment of the invention.
- Fig. 12: shows a cross-sectional view along a line A-A of the injection molding tool of Fig. 11 with a molded component part in the tool.
- Fig. 13: shows an injection molding tool with an acoustic sensor according to an exemplary embodiment of the invention prior to an interaction between flowable base material and an ejection pin.
- Fig. 14: shows the injection molding tool of Fig. 13 after an interaction between the flowable base material and the ejection pin.

### Detailed description of the drawings

The illustrations in the drawings are schematically. In different drawings similar or identical elements are provided with the same reference signs.

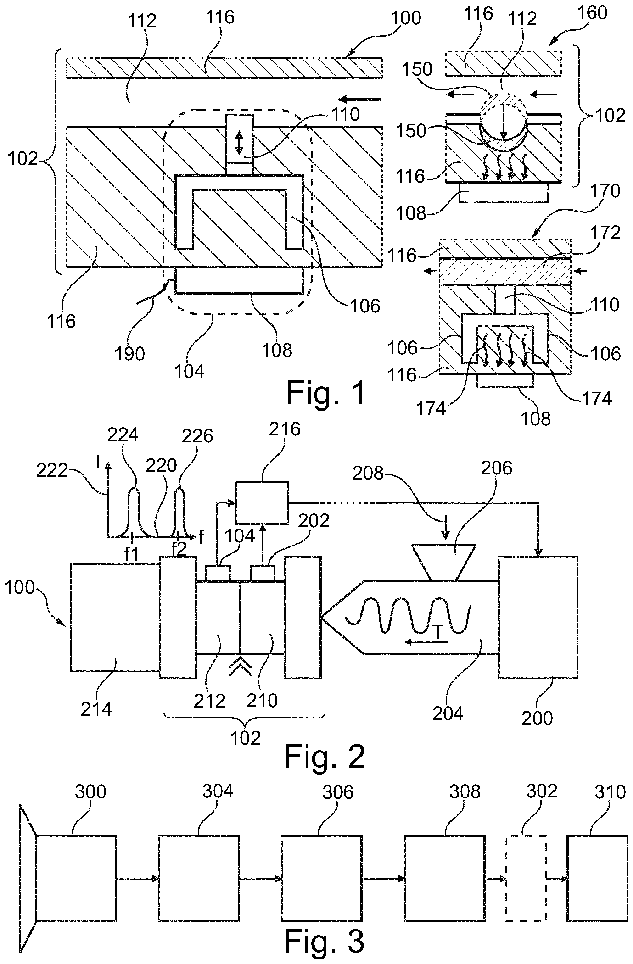

**Fig. 1** illustrates an injection molding tool 100 for manufacturing an injection molded component part from a melted or flowable plastic material.

More precisely, as known by a person skilled in the art of injection molding, a flowable liquid plastic material is injected at a high temperature in a cavity (only partially shown in Fig. 1) of a processing chamber 102 where the flowable plastic material is solidified to thereby form the injection molded component part in accordance with the shape of the cavity. Thus, the flowable base material is introducible into the processing chamber 102 for manufacturing the injection molding component part. Fig. 1 furthermore shows a flowable base material flow channel 112 through which the flowable base material can be conducted, as indicated by horizontal arrows in Fig. 1. The channel 112 is delimited by housing parts 116 of the processing chamber 102.

An acoustic sensor 104 which will be explained below in more detail is configured for generating an acoustic signal (in electronic form) when sensing acoustic waves originating from the processing chamber 102 of the tool 100. The acoustic signal provides information regarding the present manufacturing process of the component part and can therefore be used for adjusting a remaining portion of the manufacture of the present component part and/or for steering a subsequent manufacturing process of other component parts.

A control unit (not shown in Fig. 1), which may for instance be a microprocessor or a central processing unit (CPU), controls the manufacturing process in terms of adjusting process-related parameters such as temperature in the processing chamber 102, pressure in the processing chamber 102, a scheme of supplying a certain amount of flowable base material in the processing chamber 102, etc. on the basis of the sensed acoustic signal. In other words, the sensed acoustic signal can be considered as a fingerprint of the conditions and the process flow in the processing chamber 102 so that the detection and evaluation of its characteristic may be used for process control, regulation and documentation purposes.

The acoustic sensor 104 is configured for sensing such an acoustic signal originating from the processing chamber 102 rather than from the flowable base material. More precisely, the processing chamber 102 interacts with the flowable base material when the latter is injected into the cavity of the processing chamber 102. This interaction results, as will be explained in the following in more detail, in the direct generation of sound which can then be sensed. The acoustic sensor 104 comprises a movable actuator pin 110 positioned to be slidable between two states. In a first state, which the movable actuator pin 110 assumes in the absence of flowable base material in the cavity of the processing chamber 102 (for instance adjusted by a biasing element such as a spring biasing the movable actuator pin 110 in the first state), the movable actuator pin 110 projects partially into the cavity of the processing chamber 102 (see Fig. 1). In a second state, the movable actuator pin 110 has been driven completely out of the cavity of the processing chamber 102 and is embedded in the housing 116 of the processing chamber 102 (see detail 170 in Fig. 1). The second state is triggered by delivering flowable base material 172 into the processing chamber 102. This will press the movable actuator pin 110 out of the cavity of the processing chamber 102. When the movable actuator pin 110 is pushed out of material flow channel 112 (downwardly according to Fig. 1), the movable actuator pin 110 hits a correspondingly positioned acoustic wave generating element 106 (such as a U-shaped metal body) so that the latter generates acoustic waves 174 at a predetermined frequency characteristic. In the shown embodiment, the movable actuator pin 110 is an ejection pin which is configured for ejecting a manufactured and solidified component part out of the processing chamber 102 upon moving from the second state to the first state (for instance triggered by a motor, manually by a user, etc.). In other words, after having finished the manufacturing process, the ejection pin 110 is used for removing a finished (i.e. solidified) component part from the processing chamber 102. In this embodiment, the ejector pin 110 is also used synergetically for the ejection task as well as for a noise generator.

While the movable actuator 110 as well as the acoustic wave generating element 106 are located within the tool 100 (however both mounted in a wireless way), an acoustic wave sensitive element 108 of the acoustic sensor 104 is attached to an external surface of the tool 100 so as to be accessible from an external position. The acoustic wave sensitive element 108 is provided and configured for sensing the acoustic waves 174 generated by the collision between the movable actuator pin 110 and the acoustic signal generator 106 and for determining the acoustic signal based on the sensed acoustic wave. In the shown embodiment, the acoustic wave sensitive element 108 is a piezo sensor which can be attached externally to the tool 100 so that any cable connection guided through the tool 100 can be omitted. The cable 190 connecting the acoustic wave sensitive element 108 to the control unit for transmission of the sensor signal, etc., is located externally from the processing chamber 102. Furthermore, by externally attaching the acoustic wave sensitive element 108 to an outer surface of the tool 100, the acoustic wave sensitive element 108 does not come in direct contact with high temperatures and high pressure which can be present in the processing chamber 102.

In the shown embodiment, the acoustic sensor 104 is configured for sensing an acoustic signal specifically at a frequency of 8 kHz or around 8 kHz. Acoustic waves 174 at this frequency are emitted by the cooperating parts 110, 106 as a result of their configuration (shape, material, dimension).

Another detail 160 illustrated in Fig. 1 shows an alternative to the cooperating parts 110, 106 in which movable actuator pin 110 an acoustic wave generator unit 106 are formed as two separate components. In contrast to this, the detail 160 shows an embodiment in which the movable actuator and the acoustic wave generating element are integrally formed as a common structure 150, i.e. as a snap body 150 intrinsically generating a clicking noise upon changing its shape. The snap body 150 is shown with dotted lines in detail 160 in the above first state (i.e. in an upward position). Upon injecting flowable base material into the channel 112, the flowable base material exerts a force to the snap body 150 forcing it to snap from the first state into the second state (shown with solid lines in detail 160, downward position) and thereby generates sound waves to be detected by the acoustic wave sensitive element 108.

**Fig. 2** shows an injection molding tool 100 according to another exemplary embodiment of the invention.

In Fig. 2, a control unit 200 is shown. The control unit 200 receives sensor signals from two acoustic sensors 104, 202 which may be constituted as shown in Fig. 1 or otherwise. The control unit 200, in turn, controls supply of base material for manufacture of component parts via a funnel 206 into a screw drive unit 204. The material may be provided for instance as a granulate 208 and may be melted within screw drive unit 204 by the supply of thermal energy for instance provided by a continuously increasing temperature profile applied along an extension of the screw drive 204. The so produced flowable base material is then introduced into processing chamber 102 delimited and defined by two cooperating mold halves 210, 212. Each mold halve 210, 212 has an assigned acoustic sensor 104, 202 for a spatially dependent detection of acoustic signals. An ejection chamber 214 is positioned downstream of the mold halves 210, 212. Readily manufactured injection molding component parts are ejected from the mold halves 210, 212 and are stored there.

An evaluation unit 216 is shown for evaluating the raw sensor signals obtained from the acoustic sensors 104, 202 before delivery of the preprocessed sensor signals from evaluation unit 216 to the control unit 200.

A diagram, shown in Fig. 2, has an abscissa 220 along which a frequency is plotted and has an ordinate 222 along which an intensity is plotted. The diagram shows two acoustic resonances 224, 226 with assigned nonoverlapping frequency ranges and having maximum values at frequencies f₁ and f₂. Each of the two acoustic sensors 104, 202 is operative (in terms of acoustic signal generation and detection sensitivity) exclusively within the assigned frequency range so that any undesired cross-talk is avoided. Therefore, based on a frequency analysis and a pre-known frequency behavior (resonance frequency, full width half maximum) assigned to the various acoustic sensors 104, 202, it is possible to obtain spatially-resolved process information based on the frequency over time measurement shown in the detail of Fig. 2.

**Fig. 3** shows a block diagram with several structural components regarding acoustic signal evaluation according to an exemplary embodiment of the invention.

A piezo sensor 300 or any other acoustic wave sensitive element (such as a microphone) may detect the acoustic waves either in the form of body noise (related to the body of the tool 100) or in the form of acoustic waves propagating over gas such as air. The received raw signal is then sent to a band pass filter 304 allowing to pass selectively a frequency component of the sensor signal within a definable pass band (such as a band of one of the acoustic resonances 224, 226). In a pattern analysis unit 306, a pattern analysis of the filtered acoustic signal is performed so as to detect features such as a frequency maximum, a full width half maximum, a point of time related to the frequency maximum, an intensity, etc. Although not shown in Fig. 3, a base line correction may be performed for instance prior to the performance of the pattern analysis.

Subsequently, the sensor signal may be made subject of a time analysis, see block 308. Here, a chronology of the acoustic sensor signals may be analyzed so as to derive spatial information or the like. An optional pressure analysis block 302 allows to derive pressure information and flowing speed information of the flowable base material within the processing chamber 102 based on the detected body noise signals. The processed signals may then be sent to a control unit 310 (which may or may not be equivalent to the control unit 200 of Fig. 2) as a basis for the controlling of the manufacturing process.

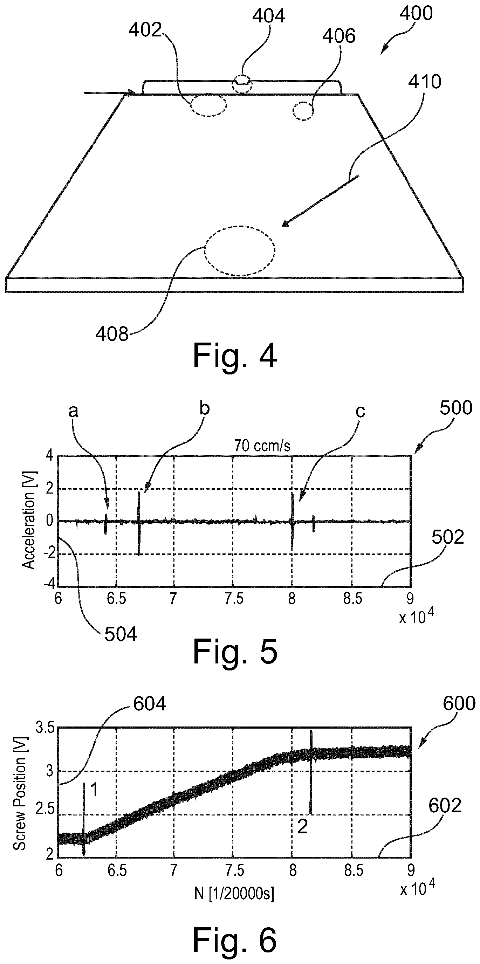

**Fig. 4** shows a component part 400 manufactured in accordance with an embodiment of the invention. The component part 400 can be ejected from a manufacturing tool by multiple ejection pins (indicated by black arrows 402, 406, 408 in Fig. 4). Reference numeral 404 denotes a gate (injection point).

**Fig. 5** is a diagram 500 having an abscissa 502 along which a number of samples per time is plotted. Along an ordinate 504, a detected acceleration is plotted (equivalent to body noise). Correspondingly, **Fig. 6** is a diagram 600 having an abscissa 602 along which again the number of samples per time is plotted. Along an ordinate 604, a screw position of an injection molding machine is plotted.

Fig. 5 therefore plots the acceleration signal, and Fig. 6 plots the simultaneously recorded screw position (marking 1 denotes the beginning of the injection process which ends at marking 2). In the diagram 500, the acoustic signal of the individual ejection pins is plotted. The signal of the ejection pin 408 located at the flow path end is specifically high as compared to the other sensor signals (marking c in Fig. 5). Signals according to marking a and b in Fig. 5 could originate from ejection pins 402 or 406 or could originate from other members of the injection molding tool.

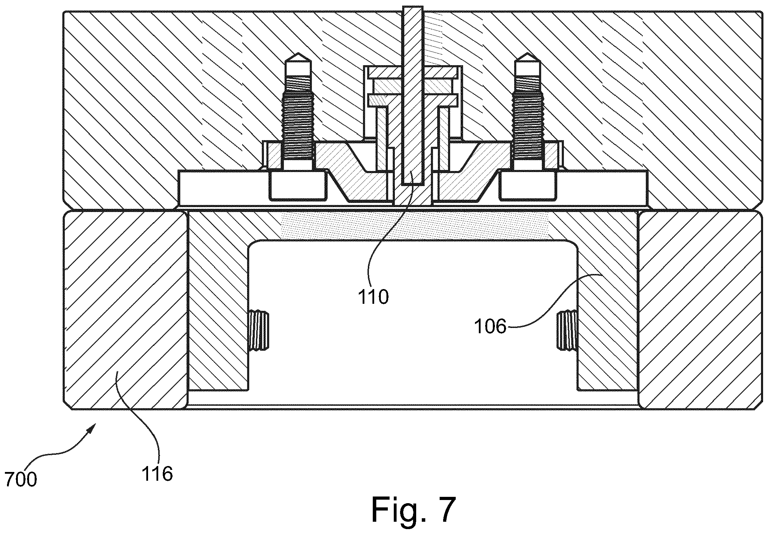

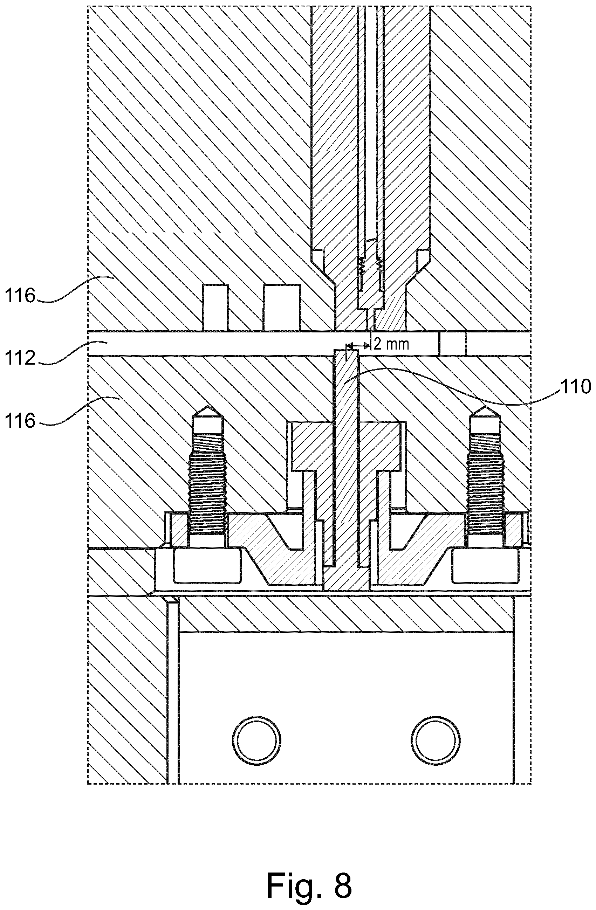

**Fig. 7** is a cross-sectional view of an embodiment which is similar to the one shown in Fig. 1 but showing further constructional details. The same holds for **Fig. 8****.**

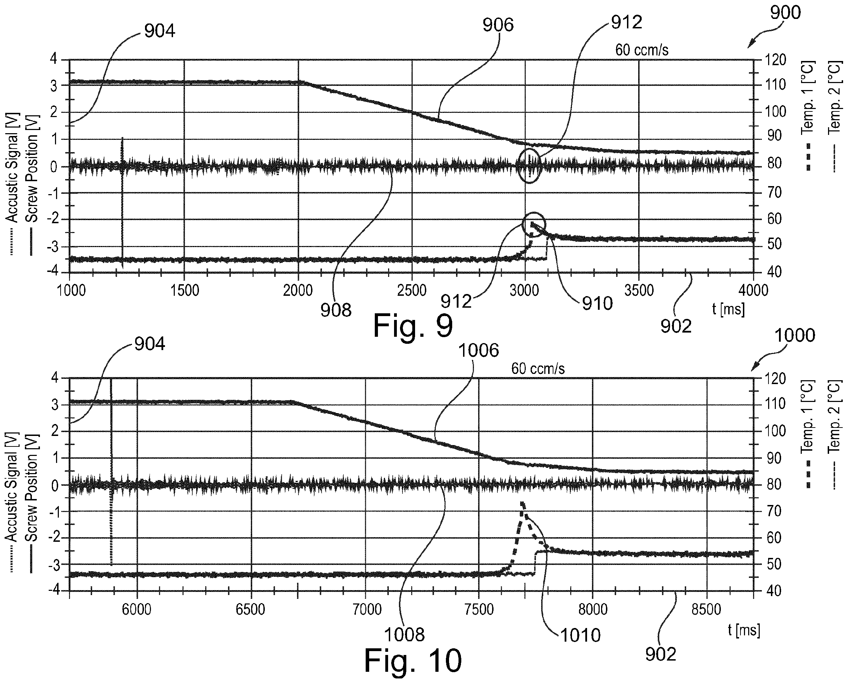

**Fig. 9** is a diagram 900 having an abscissa 902 along which a time is plotted. Along an ordinate 902, an acoustic signal (see curve 908) detected by an acoustic sensor according to an embodiment of the invention as well as a corresponding screw position (see curve 906) is plotted. A curve 910 shows a signal obtained by a conventional temperature sensor. As can be taken from Fig. 9, the detection times 912 as measured by the inventive acoustic sensor and with the conventional temperature sensor correspond to one another in good correlation.

**Fig. 10** shows a diagram 1000 which is similar to the one shown in Fig. 9 (curve 1006 corresponds to curve 906, curve 1008 corresponds to curve 908, curve 1010 corresponds to curve 910) but has been captured without an acoustic element. Since the spectral feature denoted with reference numeral 912 lacks in curve 1008 of Fig. 10, it can be concluded that this spectral feature in fact originates from the acoustic element.

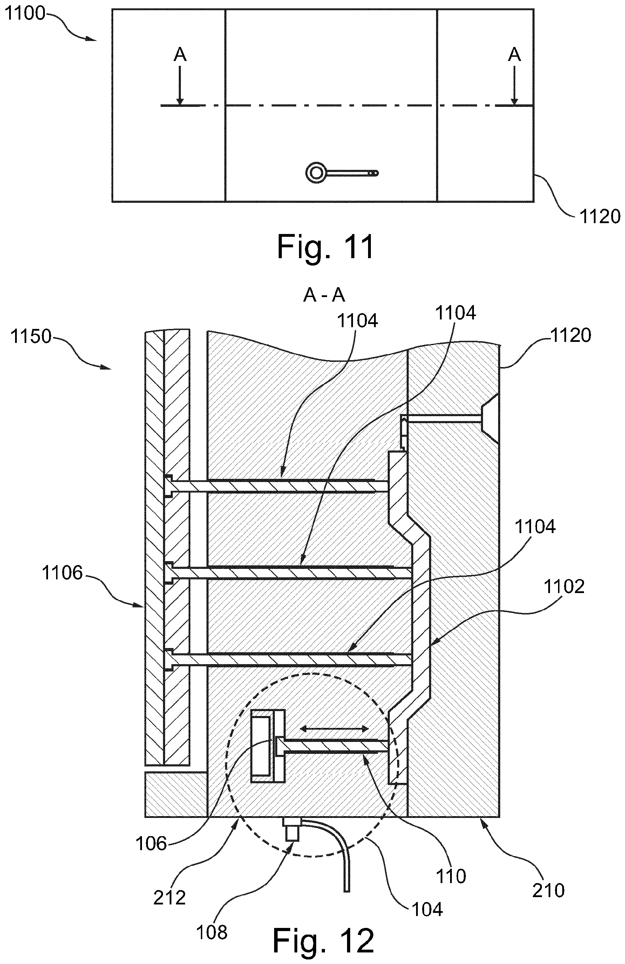

**Fig. 11** shows a plan view 1100 and **Fig. 12** shows a cross-sectional view 1150 along a line A-A of an injection molding tool 1120 with an acoustic sensor 104 according to an exemplary embodiment of the invention with a readily molded component part 1102 in the tool 1120. Ejection pins 1104 are foreseen for ejecting, in combination with an ejection packet 1106, the solidified molded component part 1102 (including a sprue). Another ejection pin 110 is foreseen for ejecting the solidified molded component part 1102 and for generating an acoustic signal upon abutting against sound body 106.

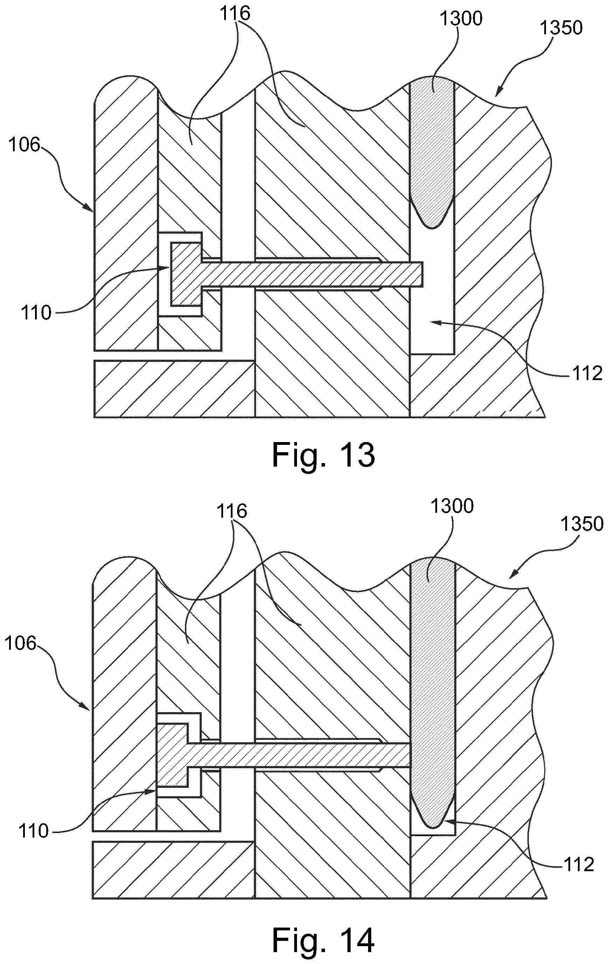

**Fig. 13** shows an injection molding tool 1350 with an acoustic sensor according to another exemplary embodiment of the invention. In Fig. 13, the tool 1350 is shown in an operation mode before an interaction between flowable base material 1300 (a molten mass) and an ejection pin 110 takes place.

As shown in **Fig. 14****,** after an interaction between the flowable base material 1300 and the ejection pin 110, the latter is pressed against a noise generating body 106. The correspondingly generated sound is detected (not shown in Fig. 13 and Fig. 14) are serves for controlling the timing of subsequent injection of flowable base material 1300 into cavity 112.

## Claims

1. A tool (100) for manufacturing a component part from a flowable base material, the tool (100) comprising:
a processing chamber (102) into which the flowable base material is introducible for manufacturing the component part;
an acoustic sensor (104) configured for sensing an acoustic signal originating from the tool (100), particularly from the processing chamber (102), and being indicative of an interaction between the flowable base material and the tool (100), particularly the processing chamber (102), during the manufacturing, wherein the acoustic sensor (104) comprises a translationally movable actuator (110) for contributing to the generation of the acoustic signal;
a control unit (200) configured for controlling and/or documenting the manufacturing in the processing chamber (102) based on the sensed acoustic signal;
wherein the movable actuator (110) is mounted at the tool (100) so that the movable actuator (110) undergoes a translational displacement when the movable actuator (110) interacts with flowable base material being introduced in the processing chamber (102).

2. The tool (100) according to claim 1, the acoustic sensor (104) comprising:
at least one movable actuator (110) to be positioned at the processing chamber (102) and being configured for being moved by the flowable base material in response to the introduction of the flowable base material into the processing chamber (102);
at least one acoustic wave generating element (106) configured for generating an acoustic wave with a predetermined frequency characteristic upon being hit by the at least one actuator (110) when being moved by the flowable base material.

3. The tool (100) according to claim 2, comprising at least one of the following features:
wherein the movable actuator (110) is an ejection pin configured for ejecting a manufactured component part out of the processing chamber (102);
wherein the movable actuator and the acoustic wave generating element are integrally formed as a common structure (150), particularly is configured an actuator body (150) intrinsically generating a click noise upon moving;
the acoustic sensor (104) further comprising at least one acoustic wave sensitive element (108) being configured for sensing the acoustic waves generated by the at least one acoustic signal generator (106) and for determining the acoustic signal based on the sensed acoustic waves, wherein the acoustic wave sensitive element is in particular one of the group consisting of a piezoelectric element (108), a semiconductor member and a membrane-based microphone (300);
the acoustic sensor (104) further comprising a pressure determining unit (302) configured to determine information indicative of a pressure-over-time characteristic in the processing chamber (102) based on the determined acoustic signal.

4. The tool (100) according to any of claims 1 to 3, configured as an original mold tool (100) for manufacturing the component part by originally molding, particularly configured as an injection molding tool (100) or a pressure casting tool.

5. The tool (100) according to any of claims 1 to 4, wherein the acoustic sensor (104) is configured for sensing an acoustic signal in a frequency range between 1 Hz and 500 kHz, particularly between 100 Hz and 30 kHz.

6. The tool (100) according to any of claims 1 to 5, comprising a plurality of acoustic sensors (104, 202), particularly each configured according to any of claims 2 or 3, each configured for sensing an acoustic signal originating from the tool (100), particularly from the processing chamber (102), during the manufacturing and each being positioned at a different position relative to the processing chamber (102).

7. The tool (100) according to claim 6, wherein each of the plurality of acoustic sensors (104, 202) is sensitive to an acoustic signal in a respective frequency range differing from at least one other frequency range, particularly differing from all other frequency ranges, in which at least one other, particularly in which all other, of the plurality of acoustic sensors (104, 202) is or are sensitive.

8. The tool (100) according to claim 6 or 7, wherein the control unit (200) is configured for controlling the manufacturing based on an analysis of the sensor signals of the plurality of acoustic sensors (104, 202) in the time domain.

9. The tool (100) according to claim 7 or 8, wherein the control unit (200) is configured for controlling the manufacturing based on spatial information derived from a correlation between the respective frequency range and a pre-known position of the respective acoustic sensor (104, 202).

10. The tool (100) according to any of claims 1 to 9, wherein the control unit (200) is configured for adjusting at least one process parameter of the manufacturing process based on the sensed acoustic signal.

11. The tool (100) according to any of claims 1 to 10, wherein the control unit (200) is configured for controlling a timing of the manufacturing process based on a time characteristic of the sensed signal.

12. The tool (100) according to any of claims 1 to 11, wherein the acoustic sensor (104) comprises:
an acoustic wave generating element (106) at the processing chamber (102) and configured for generating an acoustic wave in response to the introduction of the flowable base material into the processing chamber (102);
an acoustic wave sensitive element (108) located outside of the processing chamber (102), particularly outside of an outermost housing of the tool (100), and being configured for sensing the generated acoustic waves, particularly configured for sensing generated structure-borne acoustic waves, and for determining the acoustic signal based on the sensed acoustic wave.

13. The tool (100) according to any of claims 1 to 12, comprising at least one of the following features:
the tool (100) comprising a determining unit (216) configured for determining information indicative of the interaction between the flowable base material and the tool (100) from the sensor signal;
wherein the movable actuator (110) is mounted to be positioned at least partially within the processing chamber (102) in the absence of flowable base material or to be positioned outside of the processing chamber (102) in the presence of the flowable base material;
wherein the part of the acoustic sensor (14) positioned within the processing chamber (102) is purely mechanical, particularly free of electronics.

14. A method of controlling manufacture of a component part in a tool (100), the method comprising:
introducing a flowable base material in a processing chamber (102) of the tool (100) for manufacturing the component part;
sensing an acoustic signal originating from the processing chamber (102) and being indicative of an interaction between the flowable base material and the processing chamber (102) during the manufacturing, wherein a motion of a translationally movable actuator (110) of an acoustic sensor (104) contributes to the generation of the acoustic signal;
wherein the motion of the movable actuator (110) results from a force exerted from the flowable base material on the movable actuator (110) when flowing in the processing chamber (102);
controlling and/or documenting the manufacturing in the processing chamber (102) based on the sensed acoustic signal.

15. A method of using an acoustic signal originating directly from a movable actuator (110) in a processing chamber (102) of a tool (100) according to any of claims 1 to 13 for controlling and/or documenting manufacture of a component part from a flowable base material.

## Patentansprüche

1. Ein Werkzeug (100) zur Herstellung eines Komponententeils aus einem fließfähigen Basismaterial, wobei das Werkzeug (100) aufweist:
eine Verarbeitungskammer (102), in welche das fließfähige Basismaterial einbringbar zum Herstellen des Komponententeils ist;
einen akustischen Sensor (104), der konfiguriert ist zum Abtasten eines akustischen Signals, das von dem Werkzeug (100) ausgeht, insbesondere von der Verarbeitungskammer (102), und
indikativ ist für eine Wechselwirkung zwischen dem fließfähigen Material und dem Werkzeug (100), insbesondere der Verarbeitungskammer (102) während der Herstellung,
wobei der akustische Sensor (104) einen translatorisch beweglichen Aktuator (110) zum Beitragen zu der Erzeugung des akustischen Signals aufweist;
eine Steuereinheit (200), die konfiguriert ist zum Steuern und/oder Dokumentieren der Herstellung in der Verarbeitungskammer (102) basierend auf dem gespürten akustischen Signal;
wobei der bewegliche Aktuator (110) auf das Werkzeug (100) montiert ist, so dass der bewegliche Aktuator (110) eine translatorische Verschiebung durchführt, wenn der bewegliche Aktuator (110) mit dem fließfähigen Basismaterial interagiert, das in die Verarbeitungskammer (102) eingeführt wird.

2. Das Werkzeug (100) gemäß dem Anspruch 1, wobei der akustische Sensor (104) aufweist:
wenigstens einen bewegliche Aktuator (110) zur Positionierung an der Verarbeitungskammer (102) und konfiguriert zum Bewegt-werden durch das fließfähige Basismaterial in Antwort auf die Einführung des fließfähigen Basismaterial in die Verarbeitungskammer (102);
wenigstens ein akustische Welle erzeugendes Element (106), das konfiguriert ist zum Erzeugen einer akustischen Welle mit einer vorbestimmten Frequenz, die charakteristisch ist für ein Getroffen-werden durch den wenigstens einen Aktuator (110), wenn dieser durch das fließfähige Material bewegt wird.

3. Das Werkzeug (100) gemäß Anspruch 2, aufweisend wenigstens eines der folgenden Merkmale:
wobei der bewegliche Aktuator (110) ein Auswurfstift ist, der konfiguriert ist zum Auswerfen eines hergestellten Komponententeils aus der Verarbeitungskammer (102);
wobei der bewegliche Aktuator und das akustische Welle erzeugende Element integral gebildet sind als eine gemeinsame Struktur (150), insbesondere konfiguriert als ein Aktuator Körper (150), der intrinsisch ein Klickgeräusch bei Bewegung erzeugt;
der akustischer Sensor (104) ferner wenigstens ein akustische Welle sensitives Element (108) aufweist, das konfiguriert ist zum Abtasten der akustischen Wellen, die erzeugt werden durch den wenigstens einen akustischen Signal Generator (106) und zum Bestimmen des akustischen Signals, basierend auf den gespürten akustischen Wellen, wobei das akustische Welle sensitive Element insbesondere eines ist aus der Gruppe bestehend aus einem piezoelektrischen Element (108), einem Halbleiter Bestandteil und einem membranbasierten Mikrofon (300);
der akustische Sensor (104) ferner aufweist eine Druck bestimmende Einheit (302), die konfiguriert ist zum Bestimmen von Informationen, die indikativ sind für einen Druck über Zeit Charakteristikum in der Verarbeitungskammer (102), basierend auf dem bestimmten akustischen Signal.

4. Das Werkzeug gemäß einem der Ansprüche 1 bis 3, das konfiguriert ist als ein Forums erzeugt (100) zum Herstellen des Komponententeils durch originales Formen, insbesondere konfiguriert als ein Spritzguss Werkzeug (100) oder ein Druckguss Werkzeug.

5. Das Werkzeug (100) gemäß einem der Ansprüche 1 bis 4, wobei der akustischer Sensor (104) ausgebildet ist zum Abtasten eines akustischen Signals in einem Frequenzbereich zwischen 1 Hz und 500 kHz, insbesondere zwischen 100 Hz und 30 kHz.

6. Das Werkzeug (100) gemäß einem der Ansprüche 1 bis 5, aufweisend eine Mehrzahl von akustischen Sensoren (104, 202), wobei insbesondere jeder konfiguriert ist gemäß einem der Ansprüche 2 oder 3, wobei jeder konfiguriert ist zum Abtasten eines akustischen Signals, das von dem Werkzeug (100) ausgeht, insbesondere von der Verarbeitungskammer (102) während der Herstellung und wobei jeder an einer unterschiedlichen Position relativ zu der Verarbeitungskammer (102) positioniert ist.

7. Das Werkzeug (100) gemäß Anspruch 6, wobei jeder von der Mehrzahl von akustischen Sensoren (104, 203) sensitiv ist für ein akustisches Signal in einem jeweiligen Frequenzbereich, der sich von wenigstens einem anderen Frequenzbereich unterscheidet, insbesondere sich von allen anderen Frequenzbereich unterscheidet, in welchem wenigstens ein anderer, insbesondere in welchem alle anderen, der Mehrzahl von akustischen Sensoren (104,202) sensitiv ist oder sensitiv sind.

8. Das Werkzeug (100) gemäß einem der Ansprüchen 6 oder 7, wobei die Steuereinheit (200) konfiguriert ist zum Steuern der Herstellung basierend auf einer Analyse von den Sensorsignalen von der Mehrzahl von akustischen Sensoren (104,202) in der Zeit Domäne.

9. Das Werkzeug (100) gemäß einem der Ansprüche 7 oder 8, wobei die Steuereinheit (200) konfiguriert ist zum Steuern der Herstellung basierend auf räumlichen Informationen, die abgeleitet sind von einer Korrelation zwischen den entsprechenden Frequenzbereichen und einer vorgegebenen Position von dem jeweiligen akustischen Sensor (100,202)

10. Das Werkzeug (100) gemäß einem der Ansprüche 1 bis 9, wobei die Steuereinheit (200) ausgebildet ist zum Anpassen wenigstens eines Prozessparameters des Herstellungsprozesses basierend auf dem gespürten akustischen Signal.

11. Das Werkzeug (100) gemäß einem der Ansprüche 1 bis 10, wobei die Steuereinheit (200) konfiguriert ist zum Steuern eines Timings des Herstellungsprozesses basierend auf einem Zeit Charakteristikum des gespürten Signals.

12. Das Werkzeug (100) gemäß einem der Ansprüche 1 bis 11, wobei der akustischer Sensor (104) aufweist:
ein akustische Welle erzeugendes Element (106) an der Verarbeitungskammer (102) und konfiguriert zum Erzeugen einer akustischen Welle in Antwort auf das Einführen von dem fließfähigen Basismaterial in die Verarbeitungskammer (102);
ein akustische Welle sensitives Element (108), das außerhalb der Verarbeitungskammer (102) angeordnet ist, insbesondere außerhalb eines äußersten Gehäuses des Werkzeuges (100), welches konfiguriert ist zum Abtasten der erzeugten akustischen Wellen, insbesondere konfiguriert zum Abtasten erzeugter struktur-bedingter akustischer Wellen, und zum Bestimmen des akustischen Signals basierend auf der gespürten akustischen Welle.

13. Das Werkzeug (100) gemäß einem der Ansprüche 1 bis 12, aufweisend wenigstens eines der folgenden Merkmale:
das Werkzeug (100) aufweisend eine Bestimmungseinheit (216), die konfiguriert ist zum Bestimmen von Informationen, die indikativ sind für die Wechselwirkung zwischen dem fließfähigen Basismaterial und dem Werkzeug (100) von dem Sensorsignal;
wobei der bewegliche Aktuator (110) montiert ist, positioniert zu werden zumindest teilweise innerhalb der Verarbeitungskammer (102) in der Abwesenheit des fließfähigen Basismaterial oder positioniert zu werden außerhalb von der Verarbeitungskammer (102) in der Anwesenheit des fließfähiges Basismaterials;
wobei der Teil des akustischen Sensors (14), der innerhalb der Verarbeitungskammer (102) positioniert ist ausschließlich mechanisch ist, insbesondere frei von Elektronik ist.

14. Ein Verfahren zum Steuern der Herstellung von einem Komponententeil in einem Werkzeug (100), wobei die Methode aufweist:
Einführen von fließfähigem Basismaterial in eine Verarbeitungskammer (102) von dem Werkzeug (100) zum Herstellen des Komponententeils;
Abtasten eines akustischen Signals, das von der Verarbeitungskammer (102) ausgeht und
indikativ ist für eine Wechselwirkung zwischen dem fließfähigen Material und der Verarbeitungskammer (102) während der Herstellung,
wobei eine Bewegung eines translatorisch beweglichen Aktuators (110) eines akustischen Sensors (104) zu der Erzeugung des akustischen Signals beträgt; wobei die Bewegung des translatorisch beweglichen Aktuators (110) von einer Kraft resultiert, die von dem fließfähigen Basismaterial auf den beweglichen Aktuator (110) ausgeübt wird, wenn dieses in die Verarbeitungskammer (102) fließt;
Steuern und/oder Dokumentieren der Herstellung in der Verarbeitungskammer (102) basierend auf dem gespürten akustischen Signal.

15. Ein Verfahren zur Verwendung eines akustischen Signals, das direkt von einem beweglichen Aktuator (110) ausgeht in einer Verarbeitungskammer (102) von einem Werkzeug (100) gemäß einem der Ansprüche 1 bis 13 zum Steuern und/oder Dokumentieren der Herstellung von einem Komponententeil aus einem fließfähigen Basismaterial.

## Revendications

1. Outil (100) pour fabriquer une partie de composant à partir d'un matériau de base pouvant s'écouler, l'outil (100) comprenant :
une chambre de traitement (102) dans laquelle le matériau de base pouvant s'écouler peut être introduit pour fabriquer la partie de composant ;
un capteur acoustique (104) configuré pour détecter un signal acoustique provenant de l'outil (100), en particulier de la chambre de traitement (102), et étant indicatif d'une interaction entre le matériau de base pouvant s'écouler et l'outil (100), en particulier la chambre de traitement (102), durant la fabrication, dans lequel le capteur acoustique (104) comprend un actionneur mobile en translation (110) pour contribuer à la génération du signal acoustique ;
une unité de commande (200) configurée pour commander et/ou documenter la fabrication dans la chambre de traitement (102) sur la base du signal acoustique détecté ;
dans lequel l'actionneur mobile (110) est monté au niveau de l'outil (100) de telle sorte que l'actionneur mobile (110) subit un déplacement de translation quand l'actionneur mobile (110) interagit avec un matériau de base pouvant s'écouler introduit dans la chambre de traitement (102).

2. Outil (100) selon la revendication 1, le capteur acoustique (104) comprenant :
au moins un actionneur mobile (110) à positionner au niveau de la chambre de traitement (102) et étant configuré pour être déplacé par le matériau de base pouvant s'écouler en réponse à l'introduction du matériau de base pouvant s'écouler dans la chambre de traitement (102) ;
au moins un élément de génération d'ondes acoustiques (106) configuré pour générer une onde acoustique avec une caractéristique de fréquence prédéterminée lorsqu'il est frappé par l'au moins un actionneur (110) quand il est déplacé par le matériau de base pouvant s'écouler.

3. Outil (100) selon la revendication 2, comprenant au moins l'une des caractéristiques suivantes :
dans lequel l'actionneur mobile (110) est une tige d'éjection configurée pour éjecter de la chambre de traitement (102) une partie de composant fabriquée ;
dans lequel l'actionneur mobile et l'élément de génération d'ondes acoustiques sont formés d'un seul tenant en tant que structure commune (150), en particulier est configuré un corps d'actionneur (150) générant intrinsèquement un bruit de clic lorsqu'il est déplacé ;
le capteur acoustique (104) comprenant en outre au moins un élément sensible aux ondes acoustiques (108) étant configuré pour détecter les ondes acoustiques générées par l'au moins un générateur de signaux acoustiques (106) et pour déterminer le signal acoustique sur la base des ondes acoustiques détectées, dans lequel l'élément sensible aux ondes acoustiques est en particulier un parmi le groupe constitué d'un élément piézoélectrique (108), d'un élément à semi-conducteurs et d'un microphone à base de membrane (300) ;
le capteur acoustique (104) comprenant en outre une unité de détermination de pression (302) configurée pour déterminer des informations indicatives d'une caractéristique de pression au fil du temps dans la chambre de traitement (102) sur la base du signal acoustique déterminé.

4. Outil (100) selon l'une quelconque des revendications 1 à 3, configuré en tant qu'outil de moulage d'origine (100) pour fabriquer la partie de composant par moulage d'origine, en particulier configuré en tant qu'outil de moulage par injection (100) ou outil de coulée sous pression.

5. Outil (100) selon l'une quelconque des revendications 1 à 4, dans lequel le capteur acoustique (104) est configuré pour détecter un signal acoustique dans une plage de fréquences entre 1 Hz et 500 kHz, en particulier entre 100 Hz et 30 kHz.

6. Outil (100) selon l'une quelconque des revendications 1 à 5, comprenant une pluralité de capteurs acoustiques (104, 202), chacun étant particulièrement configuré selon l'une quelconque des revendications 2 ou 3, chacun étant configuré pour détecter un signal acoustique provenant de l'outil (100), en particulier de la chambre de traitement (102), durant la fabrication et chacun étant positionné dans une position différente par rapport à la chambre de traitement (102).

7. Outil (100) selon la revendication 6, dans lequel chacun de la pluralité de capteurs acoustiques (104, 202) est sensible à un signal acoustique dans une plage de fréquences respective différant d'au moins une autre plage de fréquences, différant en particulier de toutes les autres plages de fréquences, dans lesquelles au moins un autre, en particulier dans lesquelles tous les autres, de la pluralité de capteurs acoustiques (104, 202) est ou sont sensibles.

8. Outil (100) selon la revendication 6 ou 7, dans lequel l'unité de commande (200) est configurée pour commander la fabrication sur la base d'une analyse des signaux de capteur de la pluralité de capteurs acoustiques (104, 202) dans le domaine temporel.

9. Outil (100) selon la revendication 7 ou 8, dans lequel l'unité de commande (200) est configurée pour commander la fabrication sur la base d'informations spatiales dérivées d'une corrélation entre la plage de fréquences respective et une position pré-connue du capteur acoustique respectif (104, 202).

10. Outil (100) selon l'une quelconque des revendications 1 à 9, dans lequel l'unité de commande (200) est configurée pour ajuster au moins un paramètre de traitement du processus de fabrication sur la base du signal acoustique détecté.

11. Outil (100) selon l'une quelconque des revendications 1 à 10, dans lequel l'unité de commande (200) est configurée pour commander une temporisation du processus de fabrication sur la base d'une caractéristique de temps du signal détecté.

12. Outil (100) selon l'une quelconque des revendications 1 à 11, dans lequel le capteur acoustique (104) comprend :
un élément de génération d'ondes acoustiques (106) au niveau de la chambre de traitement (102) et configuré pour générer une onde acoustique en réponse à l'introduction du matériau de base pouvant s'écouler dans la chambre de traitement (102) ;
un élément sensible aux ondes acoustiques (108) situé à l'extérieur de la chambre de traitement (102), en particulier à l'extérieur d'un boîtier le plus extérieur de l'outil (100), et étant configuré pour détecter les ondes acoustiques générées, en particulier configuré pour détecter des ondes acoustiques de structure générées, et pour déterminer le signal acoustique sur la base de l'onde acoustique détectée.

13. Outil (100) selon l'une quelconque des revendications 1 à 12, comprenant au moins une des caractéristiques suivantes :
l'outil (100) comprenant une unité de détermination (216) configurée pour déterminer des informations indicatives de l'interaction entre le matériau de base pouvant s'écouler et l'outil (100) à partir du signal de capteur ;
dans lequel l'actionneur mobile (110) est monté pour être positionné au moins partiellement dans la chambre de traitement (102) en l'absence de matériau de base pouvant s'écouler ou pour être positionné à l'extérieur de la chambre de traitement (102) en présence du matériau de base pouvant s'écouler ;
dans lequel la partie du capteur acoustique (14) positionnée dans la chambre de traitement (102) est purement mécanique, en particulier dépourvue d'électronique.

14. Procédé de commande de fabrication d'une partie de composant dans un outil (100), le procédé comprenant :
l'introduction d'un matériau de base pouvant s'écouler dans une chambre de traitement (102) de l'outil (100) pour fabriquer la partie de composant ;
la détection d'un signal acoustique provenant de la chambre de traitement (102) et étant indicatif d'une interaction entre le matériau de base pouvant s'écouler et la chambre de traitement (102) durant la fabrication, dans lequel un mouvement d'un actionneur mobile en translation (110) d'un capteur acoustique (104) contribue à la génération du signal acoustique ;
dans lequel le mouvement de l'actionneur mobile (110) résulte d'une force exercée depuis le matériau de base pouvant s'écouler sur l'actionneur mobile (110) lors de l'écoulement dans la chambre de traitement (102) ;
la commande et/ou la documentation de la fabrication dans la chambre de traitement (102) sur la base du signal acoustique détecté.

15. Procédé d'utilisation d'un signal acoustique provenant directement d'un actionneur mobile (110) dans une chambre de traitement (102) d'un outil (100) selon l'une quelconque des revendications 1 à 13 pour commander et/ou documenter la fabrication d'une partie de composant à partir d'un matériau de base pouvant s'écouler.
